# EUROPEAN PATENT SPECIFICATION

(11) **EP 4 481 924 B1**
(45) Date of publication and mention of the grant of the patent: **17.06.2026**
(21) Application number: 23894941.6
(22) Date of filing: 17.11.2023
(51) Int. Cl.: H01M 50/358, H01M 50/24, H01M 50/204, H01M 50/325, H01M 50/249

(54) **BATTERY PACK WITH ENHANCED SAFETY**
BATTERIEPACK MIT VERSTÄRKTER SICHERHEIT
BLOC-BATTERIE À SÉCURITÉ RENFORCÉE

(30) Priority: 21.11.2022 KR 20220156193
(43) Date of publication of application: 25.12.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2023/018567
(87) International publication number: WO 2024/112013

(56) References cited:
- DE-A1- 102011 054 775
- KR-A- 20180 113 801
- KR-A- 20210 029 132
- KR-A- 20210 144 463
- KR-A- 20220 134 301
- KR-B1- 102 281 165
- US-A1- 2012 225 335
- US-A1- 2020 373 525
- US-A1- 2021 265 700

## Description

### TECHNICAL FIELD

The present disclosure relates to a battery pack or the like, and more specifically, to a battery pack or the like that enhances safety when a thermal event occurs through structural improvements to an upper frame of the battery pack.

The present application claims priority to Korean Patent Application No. 10-2022-0156193 filed on November 21, 2022 in the Republic of Korea

### BACKGROUND ART

As the demand for portable electronic products, such as laptops, video cameras, mobile phones, and the like, that use electricity as a driving source is rapidly increasing and as mobile robots, electric bicycles, electric carts, electric vehicles, and the like are widely commercialized, active research on high-performance secondary batteries capable of being repeatedly charged and discharged is underway.

Commercialized secondary batteries include nickel-cadmium batteries, nickel-hydrogen batteries, nickel-zinc batteries, lithium secondary batteries, and the like, and among them, lithium secondary batteries are being studied more intensively than other types of secondary batteries and applied more extensively to actual products due to their features of high energy density and high operating voltage, as well as their advantages of free charging and discharging according to the rare memory effect and a very low self-discharge rate, compared to nickel-based secondary batteries.

Recently, secondary batteries have been widely used in medium and large devices such as electric vehicles and energy storage systems (ESSs), as well as in small devices such as portable electronic devices.

In this case, a battery module in which multiple secondary batteries electrically connected to each other are stored inside a module case is generally applied thereto, and furthermore, a battery pack in which multiple battery modules are electrically connected to each other is also applied to the case where high power or large capacity is required.

Although secondary batteries having the above-described advantages are increasingly used in various forms, the behavior of secondary batteries may cause swelling, application of rush current, overheating due to Joule heating, thermal runaway due to decomposition reaction of the electrolyte.

In addition, if an event such as a short circuit between secondary batteries, excessive temperature rise, or the like occurs, a large amount of venting gas may be generated, and if it worsens, high-temperature particles including electrode active materials and aluminum particles may be emitted, in addition to flames, so it may be more important to secure the safety of the battery module.

Battery modules or battery packs may be more vulnerable to thermal events because they contain multiple secondary batteries (battery cells) or multiple battery modules that are space-intensively stored therein. In particular, if thermal runaway occurs inside the battery module, high-temperature gas, flame, heat, etc. are generated, and if these fail to be quickly controlled, a chain fire or explosion due to thermal propagation may occur in adjacent battery modules, as well as in the relevant battery module.

Medium and large battery packs applied to vehicles such as electric vehicles that users ride have a large number of battery cells and battery modules mounted more intensively to increase output and capacity, which may lead to large-scale fires and human damage according thereto, so there is a great need to more thoroughly suppress and control thermal events that may occur in the battery modules, the battery packs and the like from the initial stage.

However, the conventional battery pack is generally implemented as a simple collection of a plurality of battery modules, so thermal events generated in one battery module may easily be propagated to adjacent battery modules.

In particular, thermal events such as venting gas and flame have a very high temperature and thus have the characteristic of moving upward, so the venting gas and flame are concentrated in the upper area of the battery pack and are discharged strongly. At this time, if the strong straight flow of the venting gas or its force is not properly controlled, more serious safety problems, such as fire or explosion of the battery pack itself may occur.

US2020373525 discloses an energy storage device. KR20180113801 relates to a battery pack. US2021265700 provides an electric power source device, DE102011054775 discloses a battery and KR20210029132 relates to an energy storage module.

### DISCLOSURE

### Technical Problem

The present disclosure is designed to solve the problems of the related art, and therefore the present disclosure is directed to providing a battery pack with an enhanced safety by applying an improved structure, which may destroy the straight flow of flame, venting gas, or the like and weaken its power, to the upper space of the battery pack.

The technical problems that the present disclosure seeks to solve are not limited to the above-mentioned problems, and other problems not mentioned will be clearly understood by those skilled in the art from the description of the invention described below.

### Technical Solution

In one aspect of the present disclosure, there is provided a battery pack, comprising: a pack housing having an inner space; a plurality of battery modules provided in the inner space; and an upper frame having a plurality of convex blocks with a downward protruding shape at a lower portion thereof, the upper frame being coupled to an upper portion of the pack housing.

In this case, the convex block of the present disclosure is preferably configured to have a plurality of perforation holes.

Preferably, the upper frame of the present disclosure may be configured so that a concave block with an upward depression shape is provided in a region where the convex block is not located.

In addition, the convex block of the present disclosure may have a lower portion with a partially or entirely opened shape, and depending on the embodiment, may have a shape with a wide lower portion and a narrow upper portion.

Specifically, the convex block of the present disclosure may include a side plate having a fixing portion fixed to the upper frame and a wing portion that extends from the fixing portion and is elastically displaced by an external force.

Moreover, the battery pack of the present disclosure further comprises a barrier configured to separate the inner space of the pack housing, and the upper frame has a guide lane provided at a lower portion thereof so that an upper portion of the barrier is coupled thereto.

In addition, the battery module of the present disclosure may be provided in a divided space that is the inner space separated by the barrier, and the convex block may be provided in plurality so as to be provided to each region of the upper frame corresponding to the divided space.

According to another aspect of the present disclosure, there is provided a vehicle including the battery pack according to the present disclosure.

### Advantageous Effects

According to the present disclosure, by structurally improving the upper space of the battery pack by organically reflecting the behavior characteristics of flame and venting gas moving upward, it is possible to weaken the venting gas or the like, and it is also possible to destroy straight flow thereof, thereby fundamentally solving various problems caused by rapid discharge of the venting gas or the like.

In particular, according to one aspect of the present disclosure, the flow of the venting gas or the like may be effectively weakened or attenuated by blocking, confining or collecting the venting gas or the like, expanding the contact area, or causing eddies or vortices just by applying a simplified structure.

In addition, according to an embodiment of the present disclosure, by applying a structure in which the configuration for physically dividing the space accommodating the battery module and the physical configuration of the pack housing are coupled to each other, the battery module may be supported more firmly and stably, the efficiency of the assembly process may also be improved, and the durability of the pack housing itself may be strengthened structurally.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the overall appearance of a battery pack according to an embodiment of the present disclosure.
FIG. 2 is a diagram showing the internal configuration of the battery pack shown in FIG. 1.
FIGS. 3 and 4 are perspective views for illustrating the structure of an upper frame according to an embodiment of the present disclosure.
FIG. 5 is a bottom perspective view for illustrating the structure of the upper frame according to an embodiment of the present disclosure.
FIG. 6 is a diagram for illustrating a bus bar and a barrier according to an embodiment of the present disclosure.
FIG. 7 is a diagram showing an example of a convex block and a concave block according to the present disclosure, which are provided at the bottom of the upper frame.
FIG. 8 is a drawing for illustrating a contact area expanded by the upper frame, the convex block, and the concave block.
FIGS. 9 and 10 are diagrams showing a convex block according to another embodiment of the present disclosure.
FIG. 11 is a drawing showing an example of a side plate of the convex block according to the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other modifications could be made thereto without departing from the scope of the disclosure.

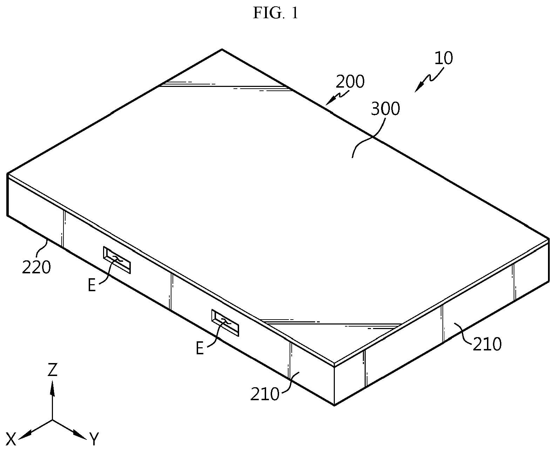

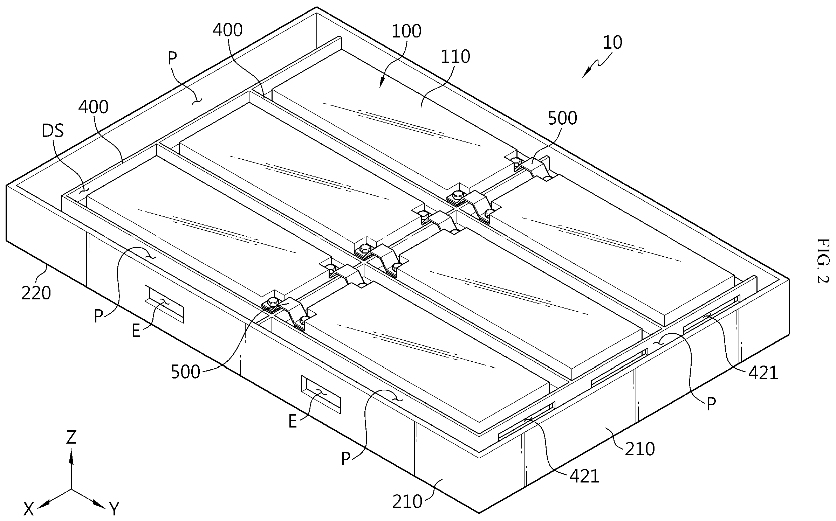

FIG. 1 is a perspective view showing the overall appearance of a battery pack 10 according to an embodiment of the present disclosure, and FIG. 2 is a diagram showing the internal configuration of the battery pack 10 shown in FIG. 1.

As illustrated in the drawings, the battery pack 10 of the present disclosure may be configured to include a pack housing 200, a battery module 100, an upper frame 300, and a barrier 400 that forms an individual space or a divided space DS where the battery module is accommodated.

The pack housing 200 is a configuration that provides the basic skeletal structure of the battery pack 10, and one or more battery modules 100 are accommodated in the inner space thereof. Specifically, the pack housing 200 may include one or more barriers 400 having a shape extending in the longitudinal direction (Y-axis direction) or the transverse direction (X-axis direction), as illustrated in the drawings. **In** this case, one or more battery modules 100 may be provided in each divided space DS divided by the barrier 400.

The pack housing 200 according to an embodiment of the present disclosure may be configured to include a lower frame 220 and a side frame 210, and the upper frame 300 of the present disclosure may be configured to be coupled with the lower frame 220 and the side frame 210 at the upper portion (based on the Z axis) thereof.

At least one of the upper frame 300, the lower frame 220, and the side frame 210 may be configured in a plate shape, but may be configured in the form of a polyhedron (for example, a rectangular parallelepiped) having a certain thickness or more.

The upper frame 300 is located at the upper portion of the pack housing 200, the lower frame 220 may be placed at the lower portion of the upper frame 230 to be spaced apart by a predetermined distance from the upper frame 230, and the side frame 210 may be arranged so that the top and the bottom thereof are connected between the upper frame 300 and the lower frame 220, respectively.

Depending on the embodiment, the lower frame 220 and the side frame 210 may be configured in an integrated form, and adjacent frames may be coupled by flange and bolt fastening, as well as laser welding or ultrasonic welding methods.

The inner surface of one or more of the upper frame 300, the lower frame 220, and the side frame 210 may be made of clad metal, or a flame retardant material such as GFRP may be attached to the inner surface thereof.

At least one of the frames 210, 220, 230 that constitute the pack housing 300 may be made of a metal material such as high-strength SUS (stainless steel) or a plastic material such as ABS resin (acrylonitrile-butadiene-styrene copolymer) with high heat resistance, temperature resistance, and impact resistance in order to effectively provide physical protection to internal components, and depending on the embodiment, different materials may be applied to different parts.

As illustrated in the drawings, the divided space DS, where each of the battery modules 100 is individually accommodated, may be formed by the barrier 400 inside the pack housing 200. The divided space DS functions as a kind of independent chamber or compartment to not only physically protect the individual battery module 100, but also primarily prevent the thermal event generated in the battery module 100 from spreading or propagating to other adjacent battery modules 100.

As shown in the drawings, the divided space DS formed by the barrier 400 is preferably installed at a position spaced inward with respect to at least one side frame 210 so that a space P is formed between the side frame 210 constituting the pack housing 200 and the divided space DS.

In this configuration, the space P may be used as a venting channel P through which a venting gas generated from the battery module 100 is discharged, and depending on the embodiment, the venting channel P may be formed in a kind of track shape that surrounds the outer peripheries of a plurality of divided spaces DS as illustrated in the drawings. Here, the venting channel P may allow the venting gas or the like generated from each battery module 100 to be effectively discharged to the outside of the pack housing 200 through the discharge hole E formed in the side frame 210.

When flame is discharged together with the venting gas, though not shown in the drawings, it is more preferable that a guider or a venting rib with a bent shape, a bent member for direction change, or the like is provided to the venting channel P to destroy the strong straight flow, which is the behavior characteristic of the flame, and thereby weaken the flame.

It is desirable that the barrier 400 forming the divided space DS is made of a material with high heat resistance and physical rigidity, like each frame constituting the pack housing 200.

As shown in the drawings, a venting hole 421 communicating with the venting channel P formed by the space between the side frame 210 of the pack housing 200 and the divided space DS as described above may be formed in some of the barriers 400.

If the venting hole 421 is formed in some of the barriers 400 as above, the venting gas generated in the battery module 100 within the divided space DS is discharged to the outside through the venting hole 421, the venting channel P, and the discharge hole E.

The drawings show an example in which the battery modules 100, which forms a 2X3 matrix group based on the longitudinal direction (Y-axis) and the transverse direction (X-axis), are accommodated in the pack housing 200, but depending on the spatial characteristics, electrical capacity, and magnitude of power of the applied device, battery modules 100 having various combinatorial arrangements such as 2X4, 2X2, 4X3 matrix groups may also be provided in the pack housing 200 through the divided space DS.

The battery module 100 accommodated in the divided space DS may include a module case 110 and a cell assembly (not shown) accommodated inside the module case 110. The cell assembly includes n (n is a natural number greater than or equal to 1) battery cells, and the leads of the n battery cells are assembled through a coupling method such as welding or a method mediated by a conductive member to form a module terminal, which is an electrical interfacing electrode of the battery module 100.

The battery cells assembled through the battery module 100 may be secondary batteries, and the secondary battery may be a pouch-type cell, a cylindrical cell, or a prismatic cell.

The method of configuring a battery module using a plurality of battery cells is a well-known technology in the art, and is not a core technology of the present disclosure, so it is not described in detail here.

The plurality of battery modules 100 provided in the pack housing 200 are electrically connected to each other in parallel, series, or a combination thereof according to appropriate specifications or design requirements demanded by the battery pack 10. As an example, the drawings show that module terminals of the same polarity provided to the battery modules 100 facing each other in the longitudinal direction (Y-axis direction) are connected to each other by a bus bar 500.

In the drawings, the electrical connection by the bus bars 500 and the battery modules 100 electrically connected to each other by the bus bar 500 are shown in a somewhat simplified form in order to effectively explain the technical idea of the present disclosure, and, depending on the embodiment, a connector structure or the like that connects the bus bars 500 to each other may be further included.

It is obvious that the axis shown in the drawing, terms referring to the axis, and terms referring to directions such as up, down, front, back, vertical, and the like described with respect to the axis are intended to provide relative criteria to describe embodiments of the present disclosure, instead of specifying any direction or location on an absolute basis, so they may also vary relatively depending on the location of a target object, the location of the an observer, viewing directions, or the like.

Hereinafter, an embodiment of the present disclosure will be described by defining the Z-axis as a criterion for the up/down or vertical direction as described above, and from the perspective corresponding thereto, embodiments of the present disclosure will be described by defining the Y-axis as a criterion for the front or back direction and the X-axis as a criterion for the left or right direction. According to the criteria defined above, the XY plane corresponds to a horizontal plane, and the Y-axis direction corresponds to the longitudinal direction (corresponding to the major axis) of the battery pack 10 or the battery module 100 in the embodiments of the present disclosure.

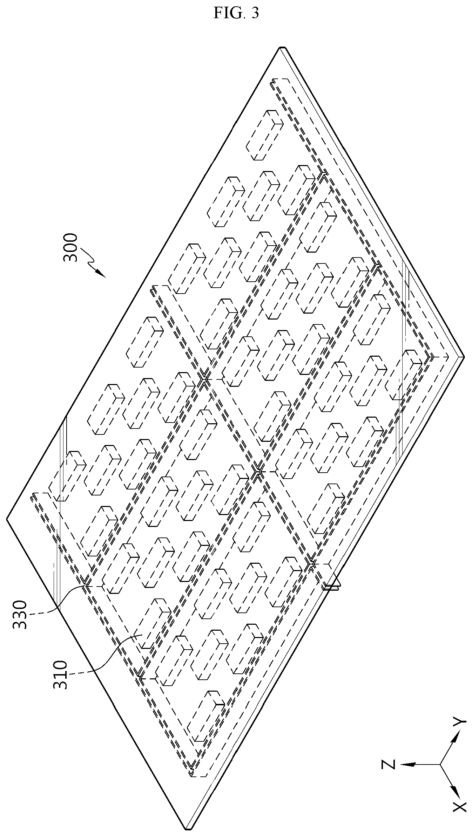

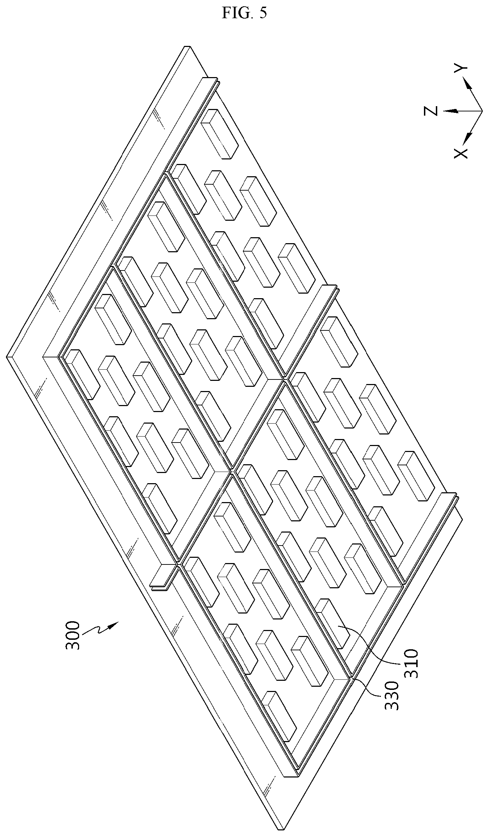

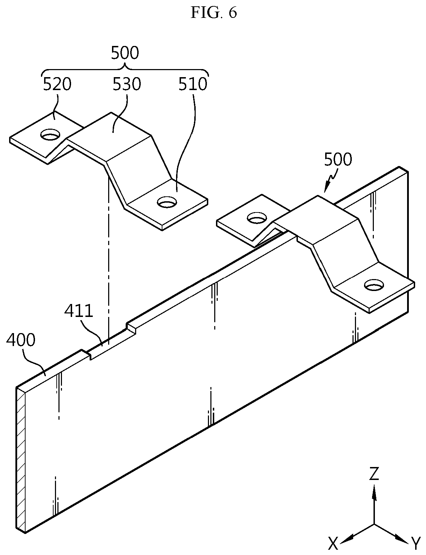

FIGS. 3 and 5 are perspective views for illustrating the structure of an upper frame 300 according to an embodiment of the present disclosure, and FIG. 6 is a diagram for illustrating a bus bar 500 and a barrier 400 according to an embodiment of the present disclosure.

The upper frame 300 of the present disclosure, which is coupled at the upper portion (based on the Z axis) of the pack housing 200, includes a convex block 310 provided at the lower portion thereof and having a shape that protrudes in the downward direction (based on the Z axis) as shown in the drawings.

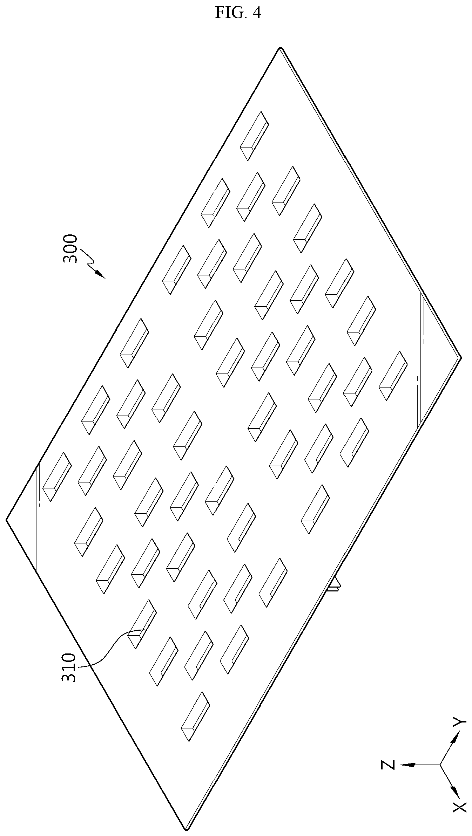

The convex block 310 may be provided in the upper frame 300 by coupling (joining, welding, fastening means, or the like) an independent structure to the lower surface of the upper frame 300 as shown in FIG. 3, and may also be implemented so that a predetermined region of the upper frame 300 protrudes downward through press processing or the like as shown in FIG. 4. If the convex block 310 is formed through press processing or the like, an additional case (not shown) may be attached to the upper portion of the upper frame 300 to strengthen physical durability and increase airtightness or the like.

A guide lane 330 is formed at the lower portion of the upper frame 300 to which the upper portion of the barrier 400 described above is coupled.

The guide lane 330 may have a groove line extending in the longitudinal direction so that the guide lane 330 may be fitted with the upper portion of the barrier 400. In this configuration, the convenience of assembly with the barrier 400 may be improved, and the structural rigidity of the battery pack 10 itself may be enhanced as the structure that vertically supports the inside of the battery pack 10 is physically coupled with the upper frame 300.

In addition, since the guide lane 330 and the barrier 400 are physically coupled to each other, it is possible to suppress the venting gas generated from an individual battery module 100 from propagating to other adjacent battery modules 100.

Although not shown in the drawings, it is preferable that the guide lane 330 in the region where the bus bar 500 is located is configured to form a space corresponding to the shape or structure of the bus bar 500.

Meanwhile, as shown in FIG. 6, it is preferable that a seating groove 411 having a depth greater than or equal to the thickness of the bus bar 500 is formed in the barrier 400 to prevent the bus bar 500 from protruding upward.

The bus bar 500 may be configured to include first and second branches 510, 520, and a bridge 530 that are electrically connected to the terminal of the battery module 100. Depending on the embodiment, the bus bar 500 may be covered with a housing made of a non-conductive material for insulation or the like.

In order to implement a structure corresponding to the seating groove 411 of the barrier 400, the bridge 530 of the bus bar 500, which is seated in the seating groove 411, is preferably configured to connects the first and second branches 510, 520 to each other and is located higher than the first and second branches 510, 520 (based on the Z axis).

According to this embodiment of the present disclosure, when coupling the pack housing 200 with the upper frame 300, it is possible to avoid steps or gaps, and it is also possible to further improve the airtightness of the divided space DS formed by the barrier 400.

If the guide lane 330 physically coupled to the barrier 400 as described above is provided in the upper frame 300, the convex block 310 of the present disclosure is preferably provided in plurality to be provided at each position corresponding to the divided space DS formed by the barrier 400, namely battery module 100.

If the upper frame 300 includes a plurality of convex blocks 310 having a shape protruding downward as above, the convex block 310 functions as a physical obstacle that blocks, separates, or disperses the movement of venting gas or flame generated from the battery module 100 or the like and discharged to the outside via the upper space of the battery pack 10, so it is possible to significantly attenuate or weaken the force of the venting gas or flame in this process.

In addition, since the venting gas or the like moves in any direction due to the convex block 310 of the present disclosure, it is possible to induce mutual collision or cancellation of the venting gas or the like. Also, since eddies or vortices naturally occur in the space between the convex blocks 310, it is possible to delay or weaken the strong flow of the venting gas or the like.

Hereinafter, the convex block 310 or the like of the present disclosure will be explained in more detail with reference to the attached drawings.

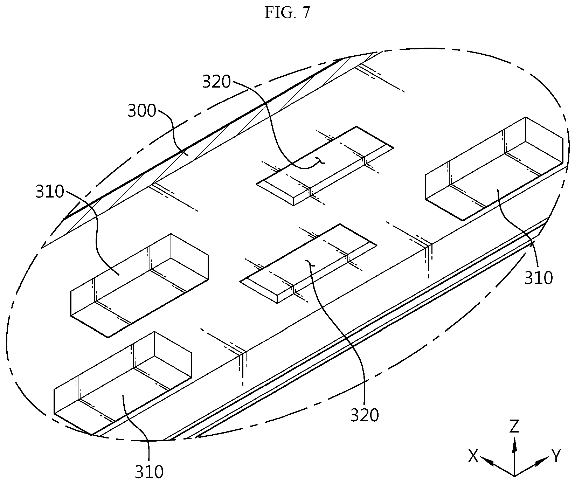

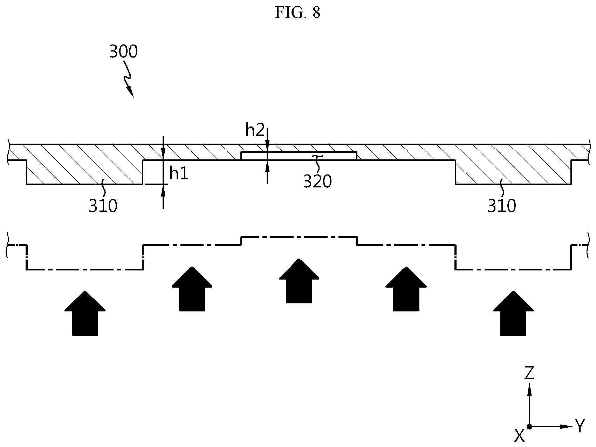

FIG. 7 is a diagram showing an example of a convex block 310 and a concave block 320 according to the present disclosure, which are provided at the bottom of the upper frame 300, and FIG. 8 is a drawing for illustrating a contact area expanded by the upper frame 300, the convex block 310, and the concave block 320.

Depending on the embodiment, a concave block 320 having an upward depression (recessed) shape may be provided in a region of the upper frame 300 where the convex block 310 is not located, as shown in FIG. 7.

If the concave block 320 is provided in the upper frame 300 as above, the venting gas or the like is partially confined in the trap space provided by the concave block 320, so it is possible to induce the collapse of the straight flow and weakening of the power of the venting gas or the like.

In addition, if the convex block 310 and the concave block 320 are provided together at the lower portion of the upper frame 300, as illustrated in FIG. 8, the height of the upper frame 300 itself, the height (h2) of the concave block 320, and the height (h1) of the convex block 310 become different from each other, so the surface area itself in contact with the rising venting gas or the like may be further expanded. Thus, the temperature drop due to the increase in contact area may also be realized more effectively.

According to this embodiment of the present disclosure, the overall mainstream flow of the venting gas or the like moving through the upper space of the battery pack 10 may be subdivided or dispersed into small-scale flows, and also the flow of venting gas or flame itself is changed into a more complex form and pattern in terms of fluid mechanics by direction change, mutual collision, vortex triggering, and interaction may be caused therebetween. Thus, it is possible to more effectively induce a decrease in the speed of the venting gas or the like and weakening of the force thereof.

In the drawings, the convex block 310 and the concave block 320 are shown in the shape of a rectangular parallelepiped, but depending on the embodiment, various modifications in terms of shape, size, height, depth, number, distribution, or the like, as well as their combinations may be applied.

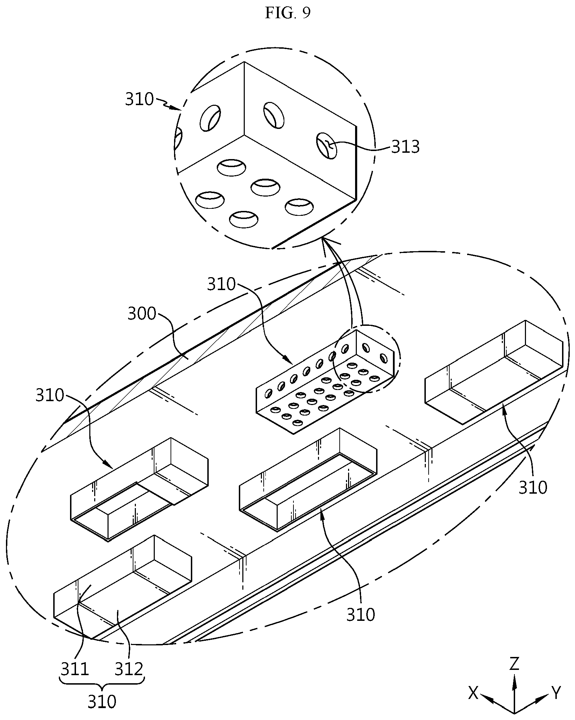

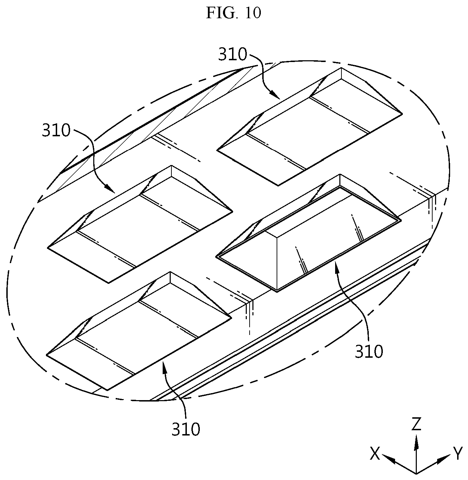

FIGS. 9 and 10 are diagrams showing a convex block 310 according to another embodiment of the present disclosure.

As shown in the drawings, a plurality of perforation holes 313 may be formed in the convex block 310 of the present disclosure. If the perforation holes 313 are formed in the convex block 310, as described above, basic functions for inducing the mainstream flow of the venting gas or the like to be subdivided or dispersed by the convex block 310 may be implemented, and at the same time, a subsequent weakening of power may be induced in the process in which a part of the venting gas or flame flows into the convex block 310 and then flows out again through the perforation holes 313.

In addition, if the perforation hole 313 is provided in the convex block 310, for example, the stream flowing in through the perforation hole 313 and the stream flowing into the convex block 310 and then flowing out through the perforation hole 313 interfere with each other, so the flows may be induced to offset each other. Thus, it is possible to reduce the discharge speed of the venting gas or the like, and in this process, the force of the venting gas or the like may be further weakened.

As illustrated in FIG. 9, the convex block 310 of the present disclosure may include a side plate 311 forming a side surface and a lower plate 312 forming a lower surface. Depending on the embodiment, the lower plate 312 may be connected to only a part of the side plate 311 so that the lower portion of the convex block 310 (based on the Z axis) is partially opened.

Since the venting gas or flame has a strong rising behavior characteristic, if the shape of the convex block 310 is configured as above, a part of the venting gas or flame may be more effectively restrained. A similar effect may also be provided even when the entire lower portion of the convex block 310 is opened.

If the convex block 310 is implemented in a form in which the perforation hole 313 is formed and the lower portion is partially or entirely open, it may function as a physical obstacle that restrict the movement of the mainstream flow and at the same time increase the contact area with the venting gas or the like to give the effect of lowering the temperature of the venting gas or the like.

In addition, the convex block 310 according to another embodiment of the present disclosure may be configured to have a shape that is relatively wide at the lower portion (based on the Z axis) and relatively narrow at the upper portion, as shown in FIG. 10.

According to this embodiment of the present disclosure, it is possible to more effectively accommodate and restrain the venting gas or the like by organically reflecting the rising behavior characteristics of the venting gas or the like.

In addition, according to this embodiment, an additional space may be naturally formed between the diagonal outer side of the convex block 310 and the lower surface of the upper frame 300. Since this additional space has a shape with a wide upper portion and a narrow lower portion, unlike the convex block 310, the venting gas or the like may not easily flow out due to this shape, so the space between the convex block 310 and the convex block 310 may also function as a space that restrains the venting gas or the like.

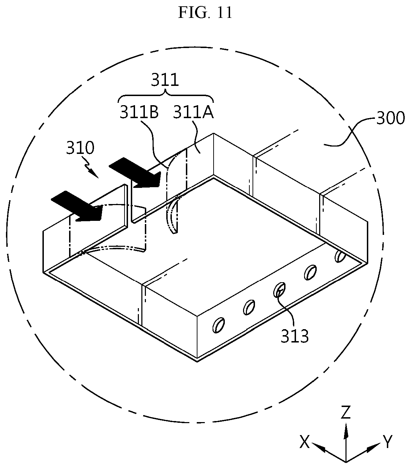

FIG. 11 is a drawing showing an example of a side plate 311 of the convex block 310 according to the present disclosure. As shown in the drawing, the side plate 311 of the convex block 310 may be specifically configured to include a fixing portion 311A fixed to the upper frame 300 or the like, and a wing portion 311B connected to the fixing portion 311A and elastically displaced by an external force.

The venting gas or the like moves upward and then moves generally in the horizontal direction (XY plane direction) along the upper frame 300. If the side plate 311 of the convex block 310 is configured to be elastically supported in this way, a part of the moving power in the horizontal direction is consumed as a force that elastically deforms the side plate 311, so the power of the venting gas or the like may be weakened to that extent.

Since the elastic restoring force continuously acts in a range that does not exceed the displacement threshold, the side plate 311, which may be made of a metal material, continuously exerts a force to the venting gas or the like in a direction opposite to the direction in which the venting gas moves as long as it does not exceed the elastic limit due to bending, rupturing, or the like, so the physical force of the venting gas or the like may be attenuated.

Even if a flow occurs in a direction opposite to the direction shown in the drawing, namely in a direction from the inside of the convex block 310 toward the outside, the elastic restoring force of the wing portion 311B acts, so the physical force of the flow may be weakened.

The drawing shows an embodiment in which the side plate 311 having the fixing portion 311A and the wing portion 311B is provided only at one side surface of the convex block 310. However, it is also possible that several or all side surfaces of the convex block 310 are implemented using the side plate 311 having the fixing portion 311A and the wing portion 311B so that the flow of the venting gas or the like may be suppressed in various direction.

In addition, as long as the elastic displacement of the wing portion 311B may be induced, the position, size, shape, number, or the like of the fixing portion 311A and the wing portion 311B may be modified in various ways, and the fixing portion 311A and the wing portion 311B may also be formed integrally as a single metal member.

The battery pack 10 according to the present disclosure may further include a battery management system (not shown). The battery management system (BMS) is mounted in the inner space of the pack housing 200 and may be configured to generally control the charging and discharging operations for the battery cell or the battery module 100 or data transmission and reception operations.

Also, the battery pack 10 according to the present disclosure may further include a battery disconnect unit. The battery disconnect unit (BDU) may be configured to control the electrical connection of the battery cells to manage the power capacity and function of the battery pack 10. For this purpose, the battery disconnect unit may include a power relay, current sensor, fuse, and the like. The battery disconnect unit is also a configuration provided in a pack unit rather than a module unit, and various disconnect units known at the time of filing of this application may be employed.

In addition, the battery pack 10 according to the present disclosure may further include various components of a battery pack known at the time of filing of this application. For example, it may further include a MSD (Manual Service Disconnector) that allows an operator to cut off power by manually disconnecting the service plug.

A vehicle (not shown) according to the present disclosure may include the battery pack 10 according to the present disclosure described above. Here, the vehicle (not shown) according to the present disclosure may be, for example, a vehicle (not shown) that uses electricity as a driving source, such as an electric vehicle or a hybrid electric vehicle. In addition, the vehicle according to the present disclosure may further include various other components included in the vehicle, such as a car body or a motor, in addition to the battery pack 10 according to the present disclosure.

Although the description of the present disclosure and the accompanying drawings to illustrate the embodiments thereof may be somewhat exaggerated in order to emphasize or highlight the technical concept of the present disclosure, it will be obvious to those skilled in the art that various types of modifications are possible in consideration of the content previously described and shown in the drawings.

In addition, it is obvious that expressions such as first, second, upper, lower, up, down, and the like in the description of the present disclosure are only instrumental terms used to relatively distinguish between respective components (elements), instead of to indicate a specific sequence or priority or to physically distinguish between the respective components (elements) according to absolute criteria.

## Claims

1. A battery pack (10), comprising:
a pack housing (200) having an inner space;
a plurality of battery modules (100) provided in the inner space;
an upper frame (300) having a plurality of convex blocks (310) with a downward protruding shape at a lower portion thereof, the upper frame (300) being coupled to an upper portion of the pack housing (200),
a barrier (400) configured to separate the inner space of the pack housing (200),
**characterized in that** the upper frame (300) has a guide lane (330) at the lower portion thereof so that an upper portion of the barrier (400) is coupled thereto.

2. The battery pack (10) according to claim 1,
wherein the convex block (310) has a plurality of perforation holes (313).

3. The battery pack (10) according to claim 1,
wherein the upper frame (300) is configured so that a concave block (320) with an upward depression shape is provided in a region where the convex block (310) is not located.

4. The battery pack (10) according to claim 1,
wherein the convex block (310) has a lower portion with a partially or entirely opened shape.

5. The battery pack (10) according to claim 4,
wherein the convex block (310) has a shape with a wide lower portion and a narrow upper portion.

6. The battery pack (10) according to claim 1,
wherein the convex block (310) includes a side plate (311) having a fixing portion (311A) fixed to the upper frame (300) and a wing portion (311B) that extends from the fixing portion (311A) and is elastically displaced by an external force.

7. The battery pack (10) according to claim 1,
wherein the battery module (100) is provided in a divided space (DS) that is the inner space separated by the barrier (400), and
wherein the convex block (310) is provided in plurality so as to be provided to each region of the upper frame (300) corresponding to the divided space (DS).

8. A vehicle, comprising the battery pack (10) according to any one of claims 1 to 7.

## Patentansprüche

1. Batteriepack (10), umfassend:
ein Packgehäuse (200), das einen Innenraum aufweist;
eine Vielzahl von Batteriemodulen (100), die in dem Innenraum bereitgestellt sind;
einen oberen Rahmen (300), der eine Vielzahl von konvexen Blöcken (310) mit einer nach unten vorstehenden Form an einem unteren Abschnitt davon aufweist, wobei der obere Rahmen (300) mit einem oberen Abschnitt des Packgehäuses (200) gekoppelt ist,
eine Barriere (400), die konfiguriert ist, um den Innenraum des Packgehäuses (200) zu trennen,
**dadurch gekennzeichnet, dass** der obere Rahmen (300) eine Führungsbahn (330) an seinem unteren Abschnitt aufweist, so dass ein oberer Abschnitt der Barriere (400) damit gekoppelt ist.

2. Batteriepack (10) nach Anspruch 1, wobei der konvexe Block (310) eine Vielzahl von Perforationslöchern (313) aufweist.

3. Batteriepack (10) nach Anspruch 1, wobei der obere Rahmen (300) so konfiguriert ist, dass ein konkaver Block (320) mit einer nach oben gerichteten Vertiefungsform in einem Bereich bereitgestellt ist, in dem der konvexe Block (310) nicht angeordnet ist.

4. Batteriepack (10) nach Anspruch 1, wobei der konvexe Block (310) einen unteren Abschnitt mit einer teilweise oder vollständig geöffneten Form aufweist.

5. Batteriepack (10) nach Anspruch 4, wobei der konvexe Block (310) eine Form mit einem breiten unteren Abschnitt und einem schmalen oberen Abschnitt aufweist.

6. Batteriepack (10) nach Anspruch 1, wobei der konvexe Block (310) eine Seitenplatte (311) mit einem Befestigungsabschnitt (311A), der an dem oberen Rahmen (300) befestigt ist, und einem Flügelabschnitt (311B) umfasst, der sich von dem Befestigungsabschnitt (311A) erstreckt und durch eine äußere Kraft elastisch verschoben wird.

7. Batteriepack (10) nach Anspruch 1, wobei das Batteriemodul (100) in einem geteilten Raum (DS) bereitgestellt ist, der der durch die Barriere (400) getrennte Innenraum ist, und wobei der konvexe Block (310) in einer Vielzahl bereitgestellt ist, um für jeden Bereich des oberen Rahmens (300) entsprechend dem geteilten Raum (DS) bereitgestellt zu werden.

8. Fahrzeug, umfassend den Batteriepack (10) nach einem der Ansprüche 1 bis 7.

## Revendications

1. Bloc-batterie (10), comprenant :
un boîtier de bloc (200) ayant un espace intérieur ;
une pluralité de modules de batterie (100) prévus dans l'espace intérieur ;
un cadre supérieur (300) ayant une pluralité de blocs convexes (310) avec une forme faisant saillie vers le bas au niveau d'une partie inférieure de celui-ci, le cadre supérieur (300) étant couplé à une partie supérieure du boîtier de bloc (200),
une barrière (400) configurée pour séparer l'espace intérieur du boîtier de bloc (200),
**caractérisé en ce que** le cadre supérieur (300) a une voie de guidage (330) au niveau de sa partie inférieure de sorte qu'une partie supérieure de la barrière (400) est couplée à celle-ci.

2. Bloc-batterie (10) selon la revendication 1, dans lequel le bloc convexe (310) a une pluralité de trous de perforation (313).

3. Bloc-batterie (10) selon la revendication 1, dans lequel le cadre supérieur (300) est configuré de sorte qu'un bloc concave (320) avec une forme de dépression vers le haut est prévu dans une région où le bloc convexe (310) n'est pas situé.

4. Bloc-batterie (10) selon la revendication 1, dans lequel le bloc convexe (310) a une partie inférieure avec une forme partiellement ou entièrement ouverte.

5. Bloc-batterie (10) selon la revendication 4, dans lequel le bloc convexe (310) a une forme avec une partie inférieure large et une partie supérieure étroite.

6. Bloc-batterie (10) selon la revendication 1, dans lequel le bloc convexe (310) inclut une plaque latérale (311) ayant une partie de fixation (311A) fixée au cadre supérieur (300) et une partie d'aile (311B) qui s'étend depuis la partie de fixation (311A) et est déplacée élastiquement par une force externe.

7. Bloc-batterie (10) selon la revendication 1, dans lequel le module de batterie (100) est prévu dans un espace divisé (DS) qui est l'espace intérieur séparé par la barrière (400), et dans lequel le bloc convexe (310) est prévu en pluralité de manière à être prévu pour chaque région du cadre supérieur (300) correspondant à l'espace divisé (DS).

8. Véhicule, comprenant le bloc-batterie (10) selon l'une quelconque des revendications 1 à 7.
